# EUROPEAN PATENT SPECIFICATION

(11) **EP 1 282 327 B1**
(45) Date of publication and mention of the grant of the patent: **18.07.2007**
(21) Application number: 02255235.0
(22) Date of filing: 26.07.2002
(51) Int. Cl.: H04Q 7/38, H04Q 7/32

(54) **System and apparatus for handover of mobile communication signals on a passenger carrying vessel**
System und Vorrichtung für das Weiterreichen von Mobilfunksignalen auf einem Passagierfahrzeug
Système et dispositif de transfert des signaux sur un véhicule de transport de passagers

(30) Priority: 03.08.2001 GB 0119010
(43) Date of publication of application: 05.02.2003
(73) Proprietor: Hutchison Whampoa Enterprises Ltd, Road Town (VG)
(72) Inventor: Woo, Chiu M.C., Hutchison Telecom. (Hong Kong) Ltd, Hunghom, Kowloon, Hong Kong (CN)
(74) Representative: Godwin, Edgar James

(56) References cited:
- EP-A- 0 780 996
- US-A- 5 235 633
- MOULY M ET AL: "HANDOVER CRITERIA" GSM SYSTEM FOR MOBILE COMMUNICATIONS, LASSAY-LES-CHATEAUX, EUROPE MEDIA, FR, 1993, pages 329,396-401, XP002071994

## Description

The invention relates to mobile telephone communications networks.

In normal circumstances a mobile telephone receives and transmits signals to different cells in the network and is automatically transferred to communicate with the best or most appropriate cell during use. It is already known to provide repeaters (or auxiliary cells) to expand the utility of the network. Typically repeaters are provided in less accessible regions such as indoor regions, road and railway tunnels, where the repeater supplies 'leaky' cables (or aerials) extending along the tunnel. This enables a telephone user to continue receiving and transmitting communication signals despite moving to or travelling through such less radio signal accessible regions. However, it is possible for a telephone user to move to regions, which are not well-served by any cells of a network, that is to regions that are outside regions normally used by the telephone user or to regions that lie geographically between two different separated networks. In those regions the communications may be too weak for normal reception or inadequate to maintain reliable communications. Typically such regions are between land areas of dense population, say, or sea or coastal channels separating towns or possibly countries. That means that mobile telephone communications may fail or be unreliable for a user making a journey through such regions.

It is an object of the invention to overcome these problems.

EP-A-0 780 996 discloses a repeater for receiving network communication signals and transmitting signals to and from mobile telephones. The repeater has a controllable gain stage and an RF power measuring device that responds to the RF power level of received network signals to alter the gain of the repeater automatically in dependence on the received RF power level to maintain communications to and from the mobile telephones in a predetermined RF power range.

US-A-5 235 633 discloses a mobile communication system in which each mobile telephone has a GPS (global positioning system) receiver and communicates its location to a centralised mobile telephone switching office.

According to a first aspect of the invention there is provided a mobile communication system for use on a passenger carrying vessel, as set forth in claim 1.

According to second aspect of the invention there is provided a mobile communication repeater for use on a passenger carrying vessel, as set forth in claim 3.

Preferred and optional features are set forth in the subsidiary claims.

Further aspects of the invention will become apparent from the following description, which is given by way of example only.

A mobile communications system according to the invention will now be described by way of example with reference to the accompanying drawings, in which:
Figure 1 is Table 1 depicting gain settings for a repeater of the device;
Figure 2 is Table 2 depicting different operating modes of the repeater;
Figure 3 is a schematic diagram of the system; and
Figure 4 is a flow chart of an operation of the device;

The described device and system is for use in a passenger carrying sea vessel that travels a route between two locations. The device could also be used in a passenger carrying vehicle travelling by land. For this reason "vessel" used in this specification, and in the claims, is intended to mean or include a "vehicle", if appropriate.

In the preferred example device and system is for use where the vessel travels between two locations having separate mobile telephone communications networks. The device and system is also applicable to a single network having a plurality of base stations along the vessels route. Furthermore, it should be recognised that a situation may exist where there are a plurality of base stations belonging to one network along a portion of the route, and then there is a change to a separate network.

As the vessel moves through a geographical region in between two locations, the RF signals of a station of a first communications network will become weaker and the signals from a station of a second communications network at the other location will become stronger.

However, the described system is particularly designed to maintain communications signals at adequate levels at all times especially when the vessel passes through a region where the signals from both networks are generally too weak for satisfactory communications to be maintained and to determine and control a hand-over from the telephone communications network to another communications network.

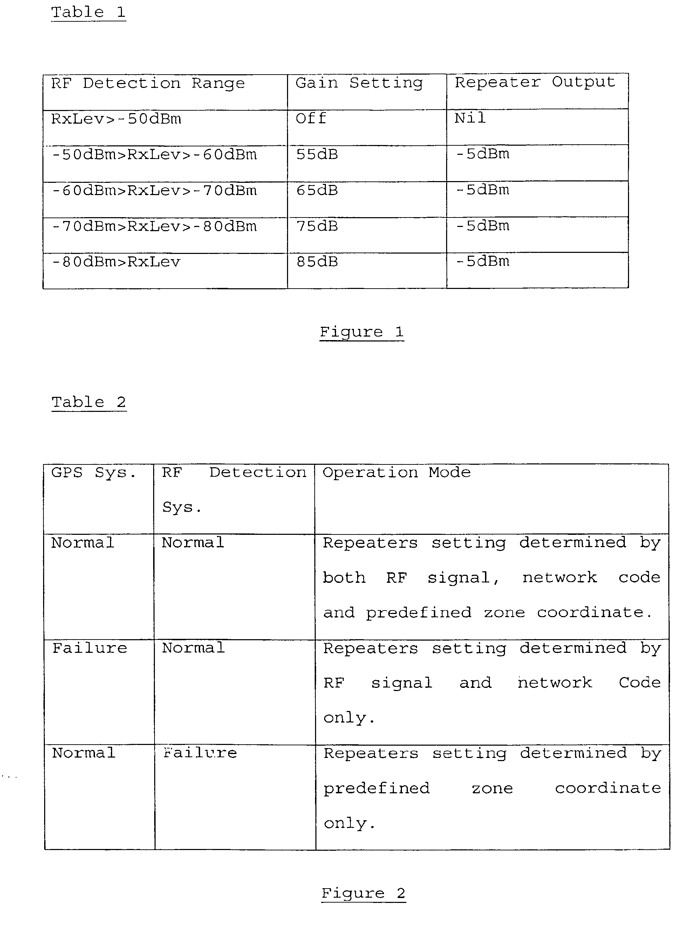

The described system can be regarded in one sense as an "intelligent repeater system" that receives and transmits communication signals selectively between two or more cell networks and neighbouring mobile telephones on the vessel. Each repeater, which can be turned ON and OFF, is arranged to continually receive network RF signals and adjust the effective amplification to maintain the signals received by the telephones at a substantially constant level and in communication via a respective repeater. The repeater system is capable of receiving and monitoring RF signals simultaneously from more than one network. In normal circumstances, the radio frequency (RF) parameters are monitored and the gain adjusted automatically as required in accordance with the gains listed in Table 1 in Figure 1.

Repeaters of the present invention are arranged to also respond to signals provided by a Global Positioning System (GPS) receiver on the vessel that enables, according to the actual geographical position of the repeater system (i.e. the vessel) at any time, influencing a hand-over to take place from the one network to the other. Thus the system is controlled in response to the RF signal and parameters received from two or more different separately located communication networks to hand-over the telephones from one repeater to another repeater respectively. Should either the RF detections fail or GPS signals fail, the mode of the repeaters may still be controlled to maintain adequate communication, as indicated by Table 2 in Figure 2.

In normal use, the system is provided on a passenger carrying vessel (or vehicle) and arranged to capture cell network communication system signals and GPS signals. The communication signals can be transmitted to either of the repeaters from mobile telephones being carried in or on the vessel and in use by passengers. As the vessel moves away from one communications network and its signals weaken, one repeater is arranged to amplify those signals accordingly in order to maintain suitable levels of transmission to the mobile telephones. At the same time another repeater would receive or begin to receive signals from another communications network, towards which the vessel is moving; the level of these received signals from the other network will increase as the vessel continues moving. At some stage, the other network signals will increase above the level of the signals received from the first network and a hand-over should ideally take place. At first, after the hand-over, the other signals should be significantly amplified and gradually amplified less as the vessel proceeds. The moment or time of hand-over can be arranged wholly in accordance with the comparative strengths of the RF signals from the two networks. However for better determination of the moment of the hand-over, use is made of the GPS signals and the RF parameters and therefore determined or at least influenced, in effect, in accordance with the actual geographical position of the vessel. Such a position may be equidistant from the two locations or pre-determined in accordance with earlier empirical measurements or trials.

The repeaters may also be controlled to hand-over based solely on GPS signals. This ensures that if the RF signals are very weak or not readily detectable (the RF detector may fail, for example), a hand-over to the network at the location towards which the vessel is travelling can be arranged to take place at an appropriate time, independently of the level of the received RF signals. Preferably or additionally in this situation, the gains of the repeaters are controlled by the GPS signals so that the settings are gradually increased and decreased appropriately either side of the hand over according to pre-set gains and in a similar same manner as gains setting adjustments based on the RF signal strengths.

Overall therefore, the system controls, that is to say adjusts automatically as required, communications that are to be received by the mobile telephones in use on the vessel, and in particular ensures that a specific and appropriate hand-over for the telephones takes place. The hand-over is therefore arranged to take place as the vessel travels through a 'middle' region located between the normally well served regions, and where the communication signals from both of two geographically separated communications networks are comparatively weak. The hand-over is determined in each case according to the relative RF parameters of the networks signals and/or according to GPS signals.

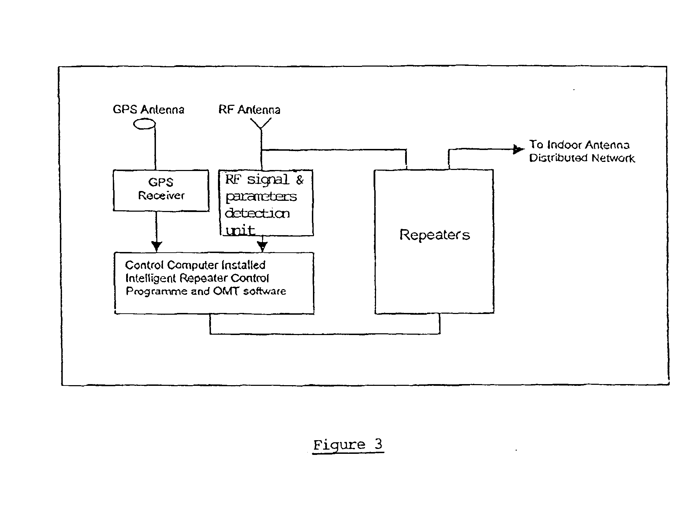

The components of the system are shown in Figure 3. The RF signal and parameter detection circuit measures the communication signals parameters such as country code, mobile network code and received RF signal strength. This information as well as 'normal' GPS signals are supplied to a programmed computer that controls the repeater system so as to maintain suitable signal levels for an indoor antenna in the vessel.

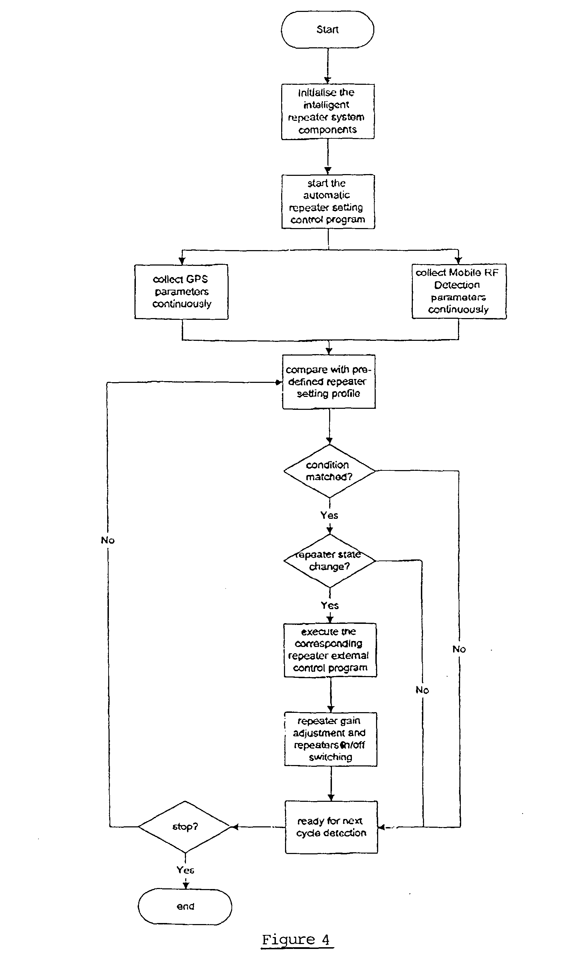

In Figure 4, the flow chart shows the operation of the computer programmed to control the repeater. The 'start' can be automatic but may be initiated by GPS signals that indicate the vessel is travelling towards a 'middle' region between the locations of two communications networks. In other words, the vessel is travelling towards a region where the signals reaching the vessel from both locations are relatively weak. The system can also be started at any time and anywhere. The GPS signals, the RF signals and parameters are sampled continuously. The system will command the repeater system is controlled to react accordingly to regular cycles thereafter.

The computer is programmed to monitor the incoming RF signal and parameters and continually change the gain of a repeater as required. According to these parameters and/or the GPS signals, the computer initiates a hand-over as explained above. In this way telephone users may operate their mobile telephone without any apparent or significant deterioration in telephone reception and operation, or interruption when travelling between two locations on the vessel.

It will be appreciated that a network device having control means that responds to RF signals can be provided. The device is arranged to set different gains according to received signal strengths to maintain or attempt to maintain, suitable signals for mobile telephones moving, in a vessel or vehicle, away from an area of normally good reception of a communications network. In this way an effective area of operation of a single network can be automatically extended. However, in a typical application, as described in this specification, gains of respective repeaters are controlled and at suitable moments repeater hand-over is determined and controlled according to signal strengths of signals received from two or more different networks geographically separated as explained. This is preferably determined in conjunction with GPS signals received by a vessel in which mobile telephone users are travelling. The repeater gains are automatically progressively increased or decreased as required, normally in steps, as the vessel moves through a 'middle' geographical region situated between two mobile telephone network locations. The progressive changes may also be made based solely on the GPS signal, if required or preferred.

Where in the foregoing description reference has been made to integers or elements having known equivalents then such are included as if individually set forth herein.

Embodiments of the invention have been described, however it is understood that variations, improvements or modifications can take place without departure from the invention as defined in the appended claims.

## Claims

1. A mobile communication system for use on a passenger carrying vessel, the system including repeaters for receiving network communication signals and transmitting the network communication signals to and from mobile telephones on the passenger carrying vessel, a radio frequency signal detector and a controller that responds to parameters of the received network communication signals to alter settings of the repeaters automatically in dependence upon the parameters to maintain communications to and from the mobile telephones on the passenger carrying vessel at or above a predetermined signal level, wherein the system includes a Global Positioning System receiver arranged to provide geographical position signals and the controller is arranged to coordinate a handover of the network communication signals to and from mobile telephones from one repeater to another repeater according to chosen relative geographical positions of the vessel.

2. A mobile communication system according to claim 1, wherein the controller is arranged to alter settings of the repeater automatically in dependence upon current geographical locations of the vessel.

3. A mobile communications repeater for use on a passenger carrying vessel travelling on a route, and for relaying mobile communication signals between a mobile telephone in use on or in said vessel and a mobile telephone network base station along the route, wherein the repeater includes a Global Positioning System receiver for determining vessel location information, a radio frequency signal detector for detecting signal strengths from two or more mobile telephone network base stations along the route, and a controller for receiving the location information and the signal strengths and using said location information and signal strengths to coordinate a handover of the mobile communication signals between said two or more mobile telephone network base stations to the mobile telephone network base station closest to the vessel location or with the greatest signal strength.

4. A mobile communications repeater as claimed in claim 3, further including a gain control unit for controlling the mobile communication signal strength between the mobile telephone and mobile telephone network base station to be within a predetermined range.

## Patentansprüche

1. Mobilfunkkommunikationssystem zum Einsatz auf einem Passagierfahrzeug, welches System Zwischenverstärker zum Empfangen von Netzwerkkommunikatiönssignalen und zum Senden der Netzwerkkommunikationssignale zu und von Mobiltelefonen auf dem Passagierfahrzeug, einen Funkfrequenzsignaldetektor und ein Steuergerät, welches auf Parameter der empfangenen Netzwerkkommunikationssignale anspricht, beinhaltet, um die Einstellungen der Zwischenverstärker automatisch in Abhängigkeit von den Parametern zu ändern, um die Kommunikationen zu und von den Mobiltelefonen auf dem Passagierfahrzeug auf oder über einem vorherbestimmten Signalpegel zu halten, wobei das System einen Global-Positioning-System-Empfänger beinhaltet, der darauf eingerichtet ist, geographische Positionssignale bereitzustellen, und das Steuergerät darauf eingerichtet ist, einen Handover der Netzwerkkommunikationssignale zu und von den Mobiltelefonen von einem zu einem anderen Zwischenverstärker gemäß ausgewählter relativer geographischer Positionen des Fahrzeugs zu koordinieren.

2. Mobilfunkkommunikationssystem nach Anspruch 1, wobei das Steuergerät darauf eingerichtet ist, die Einstellungen des Zwischenverstärkers automatisch in Abhängigkeit von den aktuellen geographischen Standorten des Fahrzeuges zu ändern.

3. Mobilfunkkommunikationszwischenverstärker zum Einsatz auf einem entlang einer Route reisenden Passagierfahrzeug und zur Weiterreichung von Mobilfunkkommunikationssignalen zwischen einem auf oder in dem Fahrzeug benutzten Mobiltelefon und einer Mobiltelefonnetzbasisstation entlang der Route, wobei der Zwischenverstärker einen Global-Positioning-System-Empfänger zum Bestimmen von Fahrzeugstandortinformation, einen Funkfrequenzsignaldetektor zum Erkennen der Signalstärken von zwei oder mehr Mobiltelefonnetzbasisstationen entlang der Route und ein Steuergerät beinhaltet, welches zum Empfang der Standortinformation und der Signalstärken dient, und die Standortinformation und die Signalstärken dazu benutzt, einen Handover der Mobilfunkkommunikationssignale zwischen den zwei oder mehr Mobiltelefonnetzbasisstationen zu derjenigen Mobiltelefonnetzbasisstation zu koordinieren, die dem Fahrzeugstandort am nächsten liegt oder die die größte Signalstärke aufweist.

4. Mobilfunkkommunikationszwischenverstärker nach Anspruch 3, ferner beinhaltend eine Verstärkungssteuereinheit zum Steuern der Mobilfunkkommunikationssignalstärke zwischen dem Mobiltelefon und der Mobiltelefonnetzbasisstation derart, dass sie innerhalb eines vorherbestimmten Bereichs gehalten wird.

## Revendications

1. Système de communication mobile pour une utilisation dans un vaisseau (véhicule) de transport de passagers, le système incluant des répéteurs pour recevoir des signaux de communication de réseau et pour transmettre les signaux de communication de réseau à partir de et vers des téléphones mobiles sur le vaisseau de transport de passagers, un détecteur de signal radiofréquence et un contrôleur qui répond à des paramètres des signaux de communication de réseau reçus afin de modifier automatiquement des réglages des répéteurs en fonction des paramètres afin de maintenir les communications à partir de et vers les téléphones mobiles sur le vaisseau de transport de passagers à un niveau de signal prédéterminé ou au dessus de ce niveau, dans lequel le système inclut un récepteur de Système de Positionnement Global agencé pour fournir des signaux de position géographique et le contrôleur est agencé pour coordonner un transfert d'un répéteur à l'autre des signaux de communication de réseau à partir de et vers les téléphones mobiles en fonction de positions géographiques relatives choisies du vaisseau.

2. Système de communication mobile selon la revendication 1, dans lequel le contrôleur est agencé pour modifier automatiquement des réglages du répéteur en fonction de localisations géographiques courantes du vaisseau.

3. Répéteur de communication mobile pour une utilisation dans un vaisseau de transport de passagers se déplaçant selon un itinéraire et pour relayer des signaux de communication mobile entre un téléphone mobile en utilisation sur ou dans ledit vaisseau et une station de base de réseau de téléphone mobile le long de l'itinéraire, dans lequel le répéteur inclut un récepteur de Système de Positionnement Global pour déterminer une information de localisation de vaisseau, un détecteur de signal radiofréquence pour détecter des intensités de signal en provenance d'au moins deux stations de base de réseau de téléphone mobile le long de l'itinéraire et un contrôleur pour recevoir l'information de localisation et les intensités de signal et pour utiliser ladite information de localisation et lesdites intensités de signal pour coordonner un transfert des signaux de communication mobile entre lesdites au moins deux stations de base de réseau de téléphone mobile et la station de base de réseau de téléphone mobile la plus proche de la localisation de vaisseau ou présentant l'intensité de signal la plus grande.

4. Répéteur de communication mobile selon la revendication 3, incluant en outre une unité de commande de gain pour commander l'intensité de signal de communication mobile entre le téléphone mobile et la station de base de réseau de téléphone mobile de telle sorte que cette intensité soit à l'intérieur d'une plage prédéterminée.
